(19) Europäisches Patentamt
European Patent Office
Office européen des brevets

(11) EP 0 774 490 A2

(12) **EUROPÄISCHE PATENTANMELDUNG**

(43) Veröffentlichungstag:
**21.05.1997 Patentblatt 1997/21**

(51) Int. Cl.[6]: **C08L 67/02**, C08K 5/098

(21) Anmeldenummer: **96117832.4**

(22) Anmeldetag: **07.11.1996**

(84) Benannte Vertragsstaaten:
**BE DE ES FR GB IT NL**

(30) Priorität: **20.11.1995 DE 19543186**

(71) Anmelder: **BAYER AG**
**51368 Leverkusen (DE)**

(72) Erfinder:
- **Magerstedt, Herbert**
  **47445 Moers (DE)**
- **Paul, Friedemann**
  **51469 Bergisch Gladbach (DE)**

# (54) Flammgeschützte thermoplastische Polyalkylenterephthalat-Formmassen

(57) Die Erfindung betrifft thermoplastische Formmassen auf der Basis von Polyalkylenterephthalat, Dinatrium-tetrabromphthalat und gegebenenfalls Glasfasern zur Herstellung von Formkörpern, die bei einem gleichzeitig guten flammwidrigen Verhalten verbesserte mechanische Eigenschaften ohne Schädigung der thermoplastischen Matrix aufweisen.

EP 0 774 490 A2

Printed by Rank Xerox (UK) Business Services
2.14.3/3.4

## Beschreibung

Die Erfindung betrifft thermoplastische Formmassen auf der Basis von Polyalkylenterephthalat, Di-natrium-tetrabromphthalat und gegebenenfalls Glasfasern zur Herstellung von Formkörpern, die bei einem gleichzeitig guten flammwidrigen Verhalten verbesserte mechanische Eigenschaften ohne Schädigung der thermoplastischen Matrix aufweisen.

Wie beispielsweise aus der Literatur Kunststoffe 80 (1990), Seite 3 und 4 bekannt ist, lassen sich Kunststoffe, wie Duroplaste, Elastomere, Polyamid, Polycarbonat etc. durch den Einsatz halogenierter Kohlenwasserstoffe flammhemmend einstellen.

Aus den oben angeführten Literaturstellen ist zu entnehmen, daß Kunststoffteile, die halogenierte Kohlenwasserstoffe enthalten, zwar eine gute flammhemmende Wirkung aufweisen, aber relativ niedrige mechanische Eigenschaften haben.

Es wurde gefunden, daß gegebenenfalls glasfaserverstärkte Polyalkylenterephthalat-Formmassen, welche mit Dinatrium-tetrabromphthalat ausgestattet sind, Formkörper ergeben, die eine hohe Kriechstromfestigkeit, ein gutes Fließverhalten bei einem gleichzeitig guten flammwidrigen Verhalten und guten übrigen Eigenschaften ohne Schädigung der thermoplastischen Matrix aufweisen. Die Formmassen sind daher auch für die Herstellung von dünnwandigen und größer dimensionierten Formkörper sehr gut geeignet.

Gegenstand der vorliegenden Erfindung sind thermoplastische Formmassen enthaltend

A) 25 bis 97, vorzugsweise 37 bis 94 Gew.-Teile Polyalkylenterephthalat,

B) 3 bis 20, vorzugsweise 5 bis 16 Gew.-Teile Di-Natrium-tetrabromphthalat,

C) 0 bis 10, vorzugsweise 1 bis 7 Gew.-Teilen Antimontrioxid oder Antimonpentoxid und

D) 0 bis 45, vorzugsweise 0 bis 40 Gew.-Teilen Verstärkungsmittel,

wobei die Summe aus A+B+C+D 100 ergibt und wobei bis zu 25 Gew.-Teile, vorzugsweise 1 bis 20 Gew.-Teile Polyalkylenterephthalat durch aromatisches Polycarbonat und/oder Pfropfpolymerisat ersetzt sein können, und wobei 1 bis 10 Gew.-Teile (bezogen auf 100 Gew.-Teile Gesamtgewicht) Polyolefine zugesetzt werden können.

### Komponente A

Polyalkylenterephthalate im Sinne der Erfindung sind Reaktionsprodukte aus aromatischen Dicarbonsäuren oder ihren reaktionsfähigen Derivaten (z.B. Dimethylestern oder Anhydriden) und aliphatischen, cycloaliphatischen oder araliphatischen Diolen und Mischungen dieser Reaktionsprodukte.

Bevorzugte Polyalkylenterephthalate lassen sich aus Terephthalsäure (oder ihren reaktionsfähigen Derivaten) und aliphatischen oder cycloaliphatischen Diolen mit 2 bis 10 C-Atomen nach bekannten Methoden herstellen (Kunststoff-Handbuch, Bd. VIII, S. 695 ff, Karl-Hanser-Verlag, München 1973).

Bevorzugte Polyalkylenterephthalate enthalten mindestens 80, vorzugsweise 90 Mol-%, bezogen auf die Dicarbonsäurekomponente, Terephthalsäurereste und mindestens 80, vorzugsweise mindestens 90 Mol-%, bezogen auf die Diolkomponente, Ethylenglykol- und/oder Butandiol-1,4-reste.

Die bevorzugten Polyalkylenterephthalate können neben Terephthalsäureestern bis zu 20 Mol-% anderer aromatischer Dicarbonsäuren mit 8 bis 14 C-Atomen oder aliphatischer Dicarbonsäuren mit 4 bis 12 C-Atomen enthalten, wie Reste von Phthalsäure, Isophthalsäure, Naphthalin-2,6-dicarbonsäure, 4,4'-Diphenyldicarbonsäure, Bernstein-, Adipin-, Sebacinsäure, Azelainsäure, Cyclohexandiessigsäure.

Die bevorzugten Polyalkylenterephthalate können neben Ethylen- bzw. Butandiol-1,4-glykolresten bis zu 20 Mol-% anderer aliphatischer Diole mit 3 bis 12 C-Atomen oder cycloaliphatischer Diole mit 6 bis 21 C-Atomen enthalten, z.B. Reste von Propandiol-1,3, 2-Ethylpropandiol-1,3, Neopentylglykol, Pentandiol-1,5, Hexandiol-1,6, Cyclohexandimethanol-1,4, 3-Methylpentandiol-2,4, 2-Methylpentandiol-2,4, 2,2,4-Trimethylpentandiol-1,3 und -1,6,2-Ethylhexandiol-1,3, 2,2-Diethylpropandiol-1,3, Hexandiol-2,5, 1,4-Di-(β-hydroxyethoxy)-benzol, 2,2-Bis-(4-hydroxycyclohexyl)-propan, 2,4-Dihydroxy-1,1,3,3-tetramethyl-cyclobutan, 2,2-bis-(3-β-hydroxyethoxyphenyl)-propan und 2,2-bis-(4-hydroxypropoxyphenyl)-propan (DE-OS 24 07 674, 24 07 776, 27 15 932).

Die Polyalkylenterephthalate können durch Einbau relativ kleiner Mengen 3- oder 4-wertiger Alkohole oder 3- oder 4-basischer Carbonsäure, wie sie z.B. in der DE-OS 19 00 270 und der US-PS 3 692 744 beschrieben sind, verzweigt werden. Beispiele für bevorzugte Verzweigungsmittel sind Trimesinsäure, Trimellitsäure, Trimethylolethan und -propan und Pentaerythrit.

Es ist ratsam, nicht mehr als 1 Mol-% des Verzweigungsmittels, bezogen auf die Säurekomponente, zu verwenden.

Besonders bevorzugt sind Polyalkylenterephthalate, die allein aus Terephthalsäure und deren reaktionsfähigen

Derivaten (z.B. deren Dialkylestern) und Ethylenglykol und/oder Butandiol-1,4 hergestellt worden sind (Polyethylen- und Polybutylenterephthalat), und Mischungen dieser Polyalkylenterephthalate.

Bevorzugte Polyalkylenterephthalate sind auch Copolyester, die aus mindestens zwei der obengenannten Säurekomponenten und/oder aus mindestens zwei der obengenannten Alkoholkomponenten hergestellt sind, besonders bevorzugte Copolyester sind Poly-(ethylenglykol/butandiol-1,4)-terephthalate.

Die als Komponente A verwendeten Polyalkylenterephthalate besitzen im allgemeinen eine Intrinsic-Viskosität von ca. 0,4 bis 1,5 dl/g, vorzugsweise 0,5 bis 1,3 dl/, jeweils gemessen in Phenol/o-Dichlorbenzol (1:1 Gew.-Teile) bei 25°C.

Ein Teil der Polyalkylenterephthalat-Komponente kann durch aromatisches Polycarbonat und gegebenenfalls kautschukelastische Polymerisate mit einer Glasübergangstemperatur von <-20°C ersetzt werden.

Auch die erfindungsgemäße Zugabe von wiederaufgearbeiteten Bestandteilen der thermoplastischen Formmassen ist möglich, ohne daß die beschriebenen Eigenschaften nachteilig beeinflußt werden. In der Regel können bis zu 25 Gew.-Teile des Polyalkylenterephthalats durch wiederaufgearbeitete Bestandteile dieser Mischung ersetzt werden.

Unter aromatischen Polycarbonaten im Sinne dieser Erfindung werden Homopolycarbonate und Mischungen dieser Polycarbonate verstanden, denen z.B. mindestens eines der folgenden Diphenole zugrunde liegt:

Hydrochinon,
Resorcin,
Dihydroxydiphenyle,
Bis-(hydroxyphenyl)-alkane,
Bis-(hydroxyphenyl)-cycloalkane,
Bis-(hydroxyphenyl)-sulfide,
Bis-(hydroxyphenyl)-ether,
Bis-(hydroxyphenyl)-ketone,
Bis-(hydroxyphenyl)-sulfone,
Bis-(hydroxyphenyl)-sulfoxide,
$\alpha,\alpha'$-Bis-(hydroxyphenyl)-diisopropylbenzole
sowie deren kernalkylierte und kernhalogenierte Derivate.

Diese und weitere geeignete Diphenole sind z.B. in den US-PS 3 028 365, 2 999 835, 3 148 172, 2 275 601, 2 991 283, 3 271 367, 3 062 781, 2 970 131und 2 999 846, in den deutschen Offenlegungsschriften 1 570 703, 2 063 050, 2 063 052, 2 211 956, 22 11 957, der französischen Patentschrift 1 561 518 und in der Monographie "H. Schnell, Chemistry and Physics of Polycarbonates, Interscience Publishers, New York 1964", beschrieben.

Bevorzugte Diphenole sind beispielsweise:

2,2-Bis-(4-hydroxyphenyl)-propan,
1,1-Bis-(4-hydroxyphenyl)-cyclohexan,
2,2-Bis-(3,5-dichlor-4-hydroxyphenyl)-propan,
2,2-Bis-(3,5-dibrom-4-hydroxyphenyl)-propan,
2,2-Bis-(3,5-dimethyl-4-hydroxyphenyl)-propan,
Bis-(3,5-dimethyl-4-hydroxyphenyl)-methan,
Bis-(4-hydroxyphenyl)-sulfid,
1,1-Bis-(4-hydroxyphenyl)-3,3,5-trimethylcyclohexan.

Die Diphenole können sowohl einzeln als auch im Gemisch eingesetzt werden.

Besonders bevorzugte aromatische Polycarbonate sind Polycarbonate auf der Basis von 2,2-Bis-(4-hydroxyphenyl)-propan bzw. einem der anderen als bevorzugt genannten Diphenole. Ganz besonders bevorzugt sind solche auf Basis von 2,2-Bis-(4-hydroxyphenyl)-propan, 2,2-Bis-(3,5-dimethyl-4-hydroxyphenyl)-propan oder 1,1-Bis-(4-hydroxyphenyl)-3,3,5-trimethylcyclohexan oder Gemische aus 2,2-Bis-(4-hydroxyphenyl)-propan und 1,1-Bis-(4-hydroxyphenyl)-3,3,5-trimethylcyclohexan.

Die aromatischen Polycarbonate können nach bekannten Verfahren hergestellt werden, z.B. durch Schmelzumesterung eines entsprechenden Bisphenols mit Diphenylcarbonat und in Lösung aus Bisphenolen und Phosgen. Die Lösung kann homogen sein (Pyridinverfahren) oder heterogen (Zweiphasengrenzflächenverfahren) (vgl. H. Schnell, "Chemistry and Physics of Polycarbonates", Polymer Reviews, Vol. IX, S. 33ff, Interscience Publ. 1964).

Die aromatischen Polycarbonate besitzen in der Regel mittlere Molekulargewichte $\overline{M}_w$ von ca. 10 000 bis 200 000, vorzugsweise 20 000 bis 80 000 (ermittelt durch Gelchromatographie nach vorheriger Eichung).

Copolycarbonate im Sinne der Erfindung sind insbesondere Polydiorganosiloxan-Polycarbonat-Blockcopolymere mit mittlerem Molekulargewicht $\overline{M}_w$ von ca. 10 000 bis 200 000, vorzugsweise 20 000 bis 80 000 (ermittelt durch Gelchromatographie nach vorheriger Eichung) und mit einem Gehalt an aromatischen Carbonatstruktureinheiten von etwa 75 bis 97,5 Gew.-%, bevorzugt 85 bis 97 Gew.-% und einem Gehalt an Polydiorganosiloxanstruktureinheiten von etwa

25 bis 2,5 Gew.-%, bevorzugt 15 bis 3 Gew.-%, wobei die Blockcopolymeren ausgehend von α,ω-Bishydroxyaryloxyendgruppen-haltigen Polydiorganosiloxanen mit einem Polymerisationsgrad $P_n$ von 5 bis 100, bevorzugt 20 bis 80, hergestellt werden.

Die Polydiorganosiloxan-Polycarbonat-Blockpolymeren können auch eine Mischung aus Polydiorganosiloxan-Polycarbonat-Blockcopolymeren mit üblichen polysiloxanfreien, thermoplastischen Polycarbonaten sein, wobei der Gesamtgehalt an Polydiorganosiloxanstruktureinheiten in dieser Mischung ca. 2,5 bis 25 Gew.-% beträgt.

Solche Polydiorganosiloxan-Polycarbonat-Blockcopolymere sind dadurch gekennzeichnet, daß sie in der Polymerkette einerseits aromatische Carbonatstruktureinheiten (1) und andererseits Aryloxyendgruppen-haltige Polydiorganosiloxane (2) enthalten,

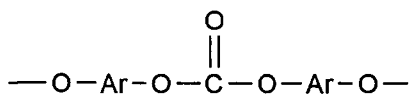

(1),

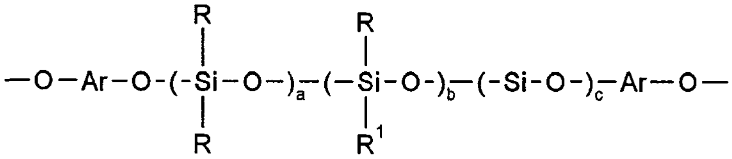

(2),

worin

Ar gleiche oder verschiedene Arylreste aus Diphenolen sind und

R und $R^1$ gleich oder verschieden sind und lineares Alkyl, verzweigtes Alkyl, Alkenyl, halogeniertes lineares Alkyl, halogeniertes verzweigtes Alkyl, Aryl oder halogeniertes Aryl, vorzugsweise aber Methyl bedeuten,

und

die Anzahl der Diorganosiloxy-Einheiten n=a+b+c= 5 bis 100, vorzugsweise 20 bis 80, ist.

Alkyl ist in vorstehender Formel (2) beispielsweise $C_1$-$C_{20}$-Alkyl, Alkenyl ist in vorstehender Formel (2) beispielsweise $C_2$-$C_6$-Alkenyl; Aryl ist in vorstehender Formel (2) $C_6$-$C_{14}$-Aryl. Halogeniert bedeutet in vorstehender Formel teilweise oder vollständig chloriert, bromiert oder fluoriert.

Beispiele für Alkyle, Alkenyle, Aryle, halogenierte Alkyle und halogenierte Aryle sind Methyl, Ethyl, Propyl, n-Butyl, tert.-Butyl, Vinyl, Phenyl, Naphthyl, Chlormethyl, Perfluorbutyl, Perfluoroctyl und Chlorphenyl.

Derartige Polydiorganosiloxan-Polycarbonat-Blockcopolymere sind z.B. aus US-PS 3 189 662, US-PS 3 821 325 und US-PS 3 832 419 bekannt.

Bevorzugte Polydiorganosiloxan-Polycarbonat-Blockcopolymere werden hergestellt, indem man α,ω-Bishydroxyaryloxyendgruppen-haltige Polydiorganosiloxane zusammen mit anderen Diphenolen, gegebenenfalls unter Mitverwendung von Verzweigern in den üblichen Mengen, z.B. nach dem Zweiphasengrenzflächenverfahren (s. dazu H. Schnell, Chemistry and Physics of Polycarbonates Polymer Rev. Vol. IX, Seite 27ff, Interscience Publishers New York 1964) umsetzt, wobei jeweils das Verhältnis der bifunktionellen phenolischen Reaktanten so gewählt wird, daß daraus der erfindungsgemäße Gehalt an aromatischen Carbonatstruktureinheiten und Diorganosiloxy-Einheiten resultiert.

Derartige α,ω-Bishydroxyaryloxyendgruppen-haltige Polydiorganosiloxane sind z.B. aus US 3 419 634 bekannt.

Die kautschukelastischen Polymerisate umfassen Copolymerisate - insbesondere Pfropfcopolymerisate - mit kautschukelastischen Eigenschaften, die im wesentlichen aus mindestens 2 der folgenden Monomeren erhältlich sind:

Chloropren, Isopren, Isobuten, Butadien, Styrol, Acrylnitril, Ethylen, Propylen, Vinylacetat und (Meth)Arcylsäureester mit 1 bis 18 C-Atomen in der Alkoholkomponente; also Polymerisate wie sie, z.B. in "Methoden der organischen Chemie" (Houben-Weyl), Bd. 14/1, Georg-Thieme-Verlag, Stuttgart 1961, S. 393-406 und in C.B. Bucknall, "Toughened Plastics", Appl. Science Publishers, London 1977, beschrieben sind. Die Polymerisate besitzen einen Gelgehalt von über 20, vorzugsweise über 40 Gew.-%. Die Glasübergangstemperatur (Tg) liegt unter -20°C.

Bevorzugte Polymerisate sind selektiv hydrierte Blockcopolyermisate eines vinylaromatischen Monomeren (X) und eines konjugierten Diens (Y) von X-Y-Typ. Diese Blockcopolymerisate können nach bekannten Verfahren hergestellt werden.

Im allgemeinen kann für die Herstellung der geeigneten X-Y-Blockcopolymersiate aus Styrol, α-Methylstyrol, Vinyltoluol usw. und aus konjugierten Dienen, wie Butadien, Isopren usw., die für die Herstellung von Styrol-Dien-Blockpolymerisaten verwendete Technologie benutzt werden, die in "Encyclopedia of Polymer Science and Technology", Bd. 15, Interscience, N.Y. (1971) auf den Seiten 508ff beschrieben ist. Die selektive Hydrierung kann auf an sich bekannten

Wegen durchgeführt werden und bedeutet, daß die ethylenischen Doppelbindungen im wesentlichen vollständig hydriert werden, wobei die aromatischen Doppelbindungen im wesentlichen unbeeinflußt bleiben.

Derartige selektiv hydrierte Blockcopolymerisate werden z.B. in der DE-OS 3 000 282 beschrieben.

Bevorzugte Polymerisate sind z.B. mit Styrol und/oder Acrylnitril und/oder (Meth)Acrylsäurealkylestern gepfropfte Polybutadiene, Butadien/Styrol-Copolymerisate und Poly(meth)acrylsäureester, z.B. Copolymerisate aus Styrol oder Alkylstyrol und konjugierten Dienen (schlagfestes Polystyrol), d.h. Copolymerisate der in der DE-OS 1 694 173 (= US-PS 3 564 077) beschriebenen Art, mit Acryl- oder Methacrylsäureester, Vinylacetat, Acrylnitril, Styrol und/oder Alkylstyrolen gepfropfte Polybutadiene, Butadien/- Styrol- oder Butadien/Acrylnitril-Copolymerisate, Polyisobutene oder Polyisoprene, wie sie z.B. in der DE-OS 2 348 377 (= US-PS 3 919 353) bzw. in der DE-A-3 105 364 und DE-A-3 019 233 beschrieben sind.

Besonders bevorzugte Polymerisate sind z.B. ABS-Polymerisate (sowohl Mischals auch Pfropftypen), wie sie z.B. in der DE-OS 2 035 390 (= US-PS 3 644 574) oder in der DE-OS 2 248 242 (= GB-PS 1 409 275) beschrieben sind.

Darüber hinaus sind besonders bevorzugte Polymerisate Pfropfpolymerisate, die durch Pfropfreaktion von

I. 10 bis 40, vorzugsweise 10 bis 35 Gew.-%, bezogen auf Pfropfprodukt, mindestens eines (Meth)Acrylsäureesters und/oder eines Gemisches aus 10 bis 40, vorzugsweise 20 bis 35 Gew.-%, bezogen auf Gemisch, Acrylnitril und 60 bis 90, vorzugsweise 65 bis 80 Gew.-%, bezogen auf Gemisch, Styrol auf

II. 60 bis 90, vorzugsweise 65 bis 90 Gew.-%, bezogen auf Pfropfprodukt, eines Butadien-Polymerisats mit mindestens 70 Gew.-%, bezogen auf II, Butadienresten als Pfropfgrundlage erhältlich sind.

Der Gelanteil der Pfropfgrundlage II ist vorzugsweise $\geq$ 70 % (in Toluol gemessen), der Pfropfgrad G 0,15 bis 0,55 und der mittlere Teilchendurchmesser $d_{50}$ des Pfropfpolymerisats C 0,2 bis 0,6 $\mu$m, vorzugsweise 0,3 bis 0,5 $\mu$m betragen (vgl. z.B. EP 0 131 202). (Meth)Acrylsäureester I sind Ester der Acrylsäure bzw. Methacrylsäure und einwertige Alkohole mit 1 bis 8 C-Atomen.

Die Pfropfgrundlage II kann neben Butadienresten bis zu 30 Gew.-%, bezogen auf II, Reste anderer ethylenisch ungesättigter Monomerer, wie z.B. Styrol, Acrylnitril, Ester der Acryl- oder Methacrylsäure mit 1 bis 4 C-Atomen in der Alkoholkomponente (wie Methylacrylat, Ethylacrylat, Methylmethacrylat, Ethylmethacrylat) enthalten. Die bevorzugte Pfropfgrundlage II besteht aus reinem Polybutadien.

Da bei der Pfropfreaktion die Pfropfmonomeren I bekanntlich nicht vollständig auf die Pfropfgrundlage II aufpfropfen, werden erfindungsgemäß unter Pfropfpolymerisaten auch solche Produkte verstanden, die neben den eigentlichen Pfropfpolymerisaten auch Homo- und Copolymerisate der eingesetzten Pfropfmonomeren I enthalten.

Der Pfropfgrad G bezeichnet das Gew.-Verhältnis von aufgepfropften Pfropfmonomeren zu Pfropfgrundlage und ist dimensionslos.

Die mittlere Teilchengröße $d_{50}$ ist der Durchmesser, oberhalb und unterhalb dessen jeweils 50 Gew.-% der Teilchen liegen. Er kann bestimmt werden mittels Ultrazentrifugen-Messungen (W. Scholtan, H. Lange, Kolloid, Z. und Z. Polymere 250 (1972), 782-796) oder mittels Elektronenmikroskopie und anschließende Teilchenauszählung (C. Kämpf, H. Schuster, Angew. Makromolekulare Chemie 14, (1970), 111-129) oder mittels Lichtstreuungsmessungen.

Besonders bevorzugte kautschukelastische Polymerisate sind z.B. auch Pfropfpolymerisate aus

a) 25 bis 98 Gew.-%, bezogen auf 100 Gew.-% Pfropfpolymerisat, Acrylatkautschuk mit einer Glasübergangstemperatur unter -20°C als Pfropfgrundlage und

b) 2 bis 75 Gew.-%, bezogen auf 100 Gew.-% Pfropfpolymerisat, mindestens eines polymerisierbaren, ethylenisch ungesättigten Monomeren, dessen bzw. deren in Abwesenheit von (a) entstandenen Homo- bzw. Copolymerisate eine Glasübergangstemperatur von 25°C hätten, als Pfropfmonomere.

Die Acrylatkautschuke (a) sind vorzugsweise Polymerisate aus Acrylsäurealkylestern, gegebenenfalls mit bis zu 40 Gew.-% anderer polymerisierbarer, ethylenisch ungesättigter Monomerer. Sofern die als Pfropfgrundlage (a) eingesetzten Acrylatkautschuke - wie nachfolgend beschrieben - ihrerseits bereits Pfropfprodukte mit einem Dienkautschukkern sind, wird zur Berechnung dieser Prozentangabe der Dienkautschukkern nicht mitgezählt. Zu den bevorzugten polymerisierbaren Acrylsäureestern gehören $C_1$-$C_8$-Alkylester, beispielsweise Methyl-, Ethyl-, Butyl-, Octyl- und 2-Ethylhexylester; Halogenalkylester, vorzugsweise Halogen-$C_1$-$C_8$-alkylester, wie Chlorethylacrylat und aromatische Ester wie Benzylacrylat und Phenethylacrylat. Sie können einzeln oder in Mischung eingesetzt werden.

Die Acrylatkautschuke (a) können unvernetzt oder vernetzt, vorzugsweise partiell vernetzt sein.

Zur Vernetzung können Monomere mit mehr als einer polymerisierbaren Doppelbindung copolymerisiert werden. Bevorzugte Beispiele für vernetzende Monomere sind Ester ungesättigter Monocarbonsäuren mit 3 bis 8 C-Atomen oder gesättigte Polyole mit 2 bis 4 OH-Gruppen und 2 bis 20 C-Atomen, wie z.B. Ethylenglykoldimethacrylat, Allylmethacrylat, mehrfach ungesättigte heterocyclische Verbindungen, wie z.B. Trivinyl- und Triallylcyanurat und -isocyanurat,

Tris-acryloyl-s-triazine, insbesondere Triallylcyanurat; polyfunktionelle Vinylverbindungen wie Di- und Trivinylbenzole; aber auch Triallylphosphat und Diallylphthalat.

Bevorzugte vernetzende Monomere sind Allylmethacrylat, Ethylenglykoldimethacrylat, Diallylphthalat und heterocyclische Verbindungen, die mindestens 3 ethylenisch ungesättigte Gruppen aufweisen.

Besonders bevorzugte vernetzende Monomere sind die cyclischen Monomere Triallylcyanurat, Triallylisocyanurat, Trivinylcyanurat, Triacryloylhexahydro-s-triazin, Triallylbenzole.

Die Menge der vernetzenden Monomeren beträgt vorzugsweise 0,02 bis 5, insbesondere 0,05 bis 2 Gew.-%, bezogen auf Pfropfgrundlage (a).

Bei cyclischen vernetzenden Monomeren mit mindestens 3 ethylenisch ungesättigten Gruppen ist es vorteilhaft, die Menge auf < 1 Gew.-% der Pfropfgrundlage (a) zu beschränken.

Bevorzugte "andere" polymerisierbare, ethylenisch ungesättigte Monomere, die neben den Acrylsäureestern gegebenenfalls zur Herstellung der Pfropfgrundlage (a) dienen können, sind z.B. Acrylnitril, Styrol, α-Methylstyrol, Acrylamide, Vinyl-$C_1$-$C_6$-alkylether. Bevorzugte Acrylkautschuke als Pfropfgrundlage (a) sind Emulsionspolymerisate, die einen Gelgehalt von ≥ 60 Gew.-% aufweisen.

Der Gelgehalt der Pfropfgrundlage (a) wird bei 25°C in Dimethylformamid bestimmt (M. Hoffmann, H. Krämer, R. Kuhn, Polymeranalytik I und II, Georg-Thieme-Verlag, Stuttgart 1977).

Acrylatkautschuke als Pfropfgrundlage (a) können auch Produkte sein, die einen vernetzten Dienkautschuk aus einem oder mehreren konjugierten Dienen, wie Polybutadien, oder ein Copolymerisat eines konjugierten Diens mit einem ethylenisch ungesättigten Monomer, wie Styrol und/oder Acrylnitril, als Kern enthalten.

Der Anteil des Polydien-Kerns in der Pfropfgrundlage (a) kann 0,1 bis 80, bevorzugt 10 bis 50 Gew.-%, bezogen auf (a), betragen. Schale und Kern können unabhängig voneinander unvernetzt, teilvernetzt oder hochvernetzt sein.

Ganz besonders bevorzugt sind die zuvor erwähnten Pfropfpolymerisate aus Polybutadien als Pfropfgrundlage und (Meth)Acrylsäureester und Acrylnitril als Pfropfauflage, wobei die Pfropfgrundlage aus 65 bis 90 Gew.-% Teilen vernetztem Polybutadien mit einem Gelgehalt von über 70 % (in Toluol) und die Pfropfgrundlage aus einem 5:1 bis 20:1 Gemisch aus Methylmethacrylat und n-Butylacrylat bestehen (z.B. DE 3 105 364, DE 3 019 233).

**Komponente B und C:**

Di-Natrium-tetrabromphthalat

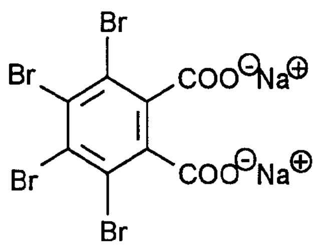

ist eine allgemein bekannte Verbindung.

Antimontrioxid und Antimonpentoxid sind ebenfalls allgemein bekannte Verbindungen.

**Komponente D:**

Als Verstärkungsmittel kommen verstärkend wirkende Füllstoffe in Frage. Bevorzugt sind dabei faserförmige Stoffe, insbesondere Glasfasern, mit einem Faserdurchmesser zwischen ca. 8 bis 14 µm.

Die Glasfasern können als Endlosfasern oder als geschnittene oder gemahlene Glasfasern eingesetzt werden, wobei die Fasern mit einem geeigneten Schlichtesystem und einem Haftvermittler bzw. Haftvermittlersystem auf Silanbasis ausgerüstet sein können.

Es können aber auch andere faserförmige Verstärkungsmaterialien wie Kohlenstoffasern, K-Titanat-Einkristallfasern, Gipsfasern, Aluminiumoxidfasern oder Asbest eingearbeitet werden. Nichtfasrige Füllstoffe wie z.B. Glaskugeln, Hohlglaskugeln oder Kreide, Quarz, natürliche und calcinierte Kaole sind ebenso bevorzugt wie Kombinationen dieser Materialien mit Glasfasern. Diese Füllstoffe können wie die Glasfasern ebenfalls mit einer Schlichte und/oder einem Haftvermittler oder Haftvermittlersystem versehen sein.

Insbesondere werden Glasfasern verwendet.

Die thermoplastische Formmasse kann 1 bis 10, insbesondere 2 bis 8 Gew.-Teile (bezogen auf 100 Gew.-Teile Gesamtgewicht) Polyolefine enthalten. Geeignete Polyolefine sind Polymere von aliphatischen ungesättigten Kohlenwasserstoffen, wie beispielsweise Ethylen, Propylen, Butylen oder Isobutylen, die nach üblichen Verfahren, z.B. Radikalpolymerisation, erhalten werden und mittlere Gewichtsmittel-Molekulargewichte $\overline{M}_w$ (gemessen nach gelchromatographischen Methoden) zwischen 3 000 und 3 000 000 haben. Es ist sowohl Hochdruck- als auch Niederdruckpolyolefin verwendbar. Bevorzugt sind Polyethylene und Polypropylene.

Die Formmassen können Nukleierungsmittel wie Mikrotalk enthalten. Weiterhin können die Formmassen übliche Zusatzstoffe wie Gleit- und Entformungsmittel, Verarbeitungsstabilisatoren sowie Farbstoffe und Pigmente enthalten.

Aus den Formmassen hergestellte Formkörper können Bauteile aus dem Elektrosektor sein, für die ein hohes Kriechstromfestigkeit und Fließverhalten bei einem gleichzeitig guten flammwidrigen Verhalten, ohne Schädigung der thermoplastischen Matrix gewünscht werden. So kommen z.B. Gehäuseteile, Steckerleisten und Leuchtensockel sowie Teile aus dem Kraftfahrzeugsektor zum Einsatz.

Die Komponenten werden gemischt, anschließend mittels eines Extruders compoundiert und in einer Spritzgußmaschine bei üblichen Verarbeitungsbedingungen für Polyalkylenterephthalate (Massetemperatur ca. 260°C bei Polybutylenterephthalat, bei Polyethylenterephthalat ca. 270°C) zu Formteilen verarbeitet. Entsprechend werden auch die in den Beispielen angegebenen Komponenten gemischt, extrudiert und zu Prüfkörpern verarbeitet.

## Beispiele

**Beispiel 1A** (erfindungsgemäß)

| | |
|---|---|
| 54,82 Gew.-% | Polybutylenterephthalat (PBT) Intrinsic Viskosität 0,900-0,950 |
| 30,00 Gew.-% | Glasfasern Typ OC 29 R (Owens/Corning) |
| 10,00 Gew.-% | Di-Natrium-tetrabromphthalat (FR 756) Fa. Great Lakes |
| 4,50 Gew.-% | Antimontrioxid |
| 0,68 Gew.-% | Additive (Verarbeitungshilfsmittel, Stabilisatoren) |

**Beispiel 1B** (Vergleich zu Beispiel 1A)

| | |
|---|---|
| 54,82 Gew.-% | Polybutylenterephthalat (PBT) Intrinsic Viscosität 0,900-0,950 |
| 30,00 Gew.-% | Glasfasern Typ OC 29 R (Owens/Corning) |
| 10,00 Gew.-% | Tetrabrombisphenololigocarbonat (Great Lakes BC 52 HP) |
| 4,50 Gew.-% | Antimontrioxid |
| 0,68 Gew.-% | Additive (Verarbeitungshilfsmittel, Stabilisatoren) |

**Beispiel 2A** (erfindungsgemäß)

| | |
|---|---|
| 62,6 Gew.-% | Polyethylenterephthalat, Fa. Schwarze |
| 25,0 Gew.-% | Glasfasern Typ CS 7962 (BAYER AG) |
| 8,5 Gew.-% | Di-Natrium-tetrabromphthahlat (s.o.) |
| 2,0 Gew.-% | Antimontrioxid |
| 0,5 Gew.-% | Zinksulfid |
| 1,4 Gew.-% | Additive (Verarbeitungshilfsmittel, Stabilisatoren) |

**Beispiel 2B** (erfindungsgemäß)

| | |
|---|---|
| 59,1 Gew.-% | Polyethylenterephthalat (Fa. Schwarze) |
| 25,0 Gew.-% | Glasfasern Typ CS 7962 (Bayer AG) |
| 12,0 Gew.-% | Di-Natrium-tetrabromphthalat |
| 2,0 Gew.-% | Antimontrioxid |
| 0,5 Gew.-% | Zinksulfid |
| 1,4 Gew.-% | Additive (Verarbeitungshilfsmittel, Stabilisatoren) |

**Beispiel 2C** (Vergleich zu den Beispielen 2A und 2B)

| | |
|---|---|
| 62,6 Gew.-% | Polyethylenterephthalat (Fa. Schwarze) |
| 25,0 Gew.-% | Glasfasern Typ CS 7962 (BAYER AG) |
| 8,5 Gew.-% | Ethylen-bis-tetrabromphthalimid (Saytex BT 93 weiß, Fa. Ethyl) |
| 2,0 Gew.-% | Antimontrioxid |
| 0,5 Gew.-% | Zinksulfid |
| 1,4 Gew.-% | Additive (Verarbeitungshilfsmittel, Stabilisatoren |

**Beispiel 3A** (erfindungsgemäß)

68,8 Gew.-% Polybutylenterephthahat Intrinsic Viskosität 1,135-1,210
12,0 Gew.-% ABS-Pfropfkautschuk
15,0 Gew.-% Di-Natrium-tetrabromphthalat
3,0 Gew.-% Antimontrioxid
1,2 Gew.-% Additive (Verarbeitungshilfsmittel, Stabilisatoren)

**Beispiel 3B** (Vergleich zu Beispiel 3A)

73,4 Gew.-% Polybutylenterephthahalat Intrinsic Viscosistät 1,135-1,210
12,0 Gew.-% ABS-Pfropfkautschuk
10,5 Gew.-% Ethylen-bis-tetrabromphthalimid (Saytex BT 93 weiß), Fa. Ethyl
3,0 Gew.-% Antimontrioxid
1,1 Gew.-% Additive (Verarbeitungshilfsmittel, Stabilisatoren)

Als ABS-Pfropfkautschuk wird ein Pfropfpolymerisat aus 25 Gew.-% Styrol-Acrylnitril-Gemisch im Gewichtsverhältnis von 72:28 auf 75 Gew.-% teilchenförmiges Polybutadien einer mittleren Teilchengröße ($d_{50}$) von 0,4 µm, erhalten durch Emulsionspolymerisation eingesetzt.

Beschreibung der Testmethoden:

Vergleichszahl der Kriechwegbildung (CTI), Prüflösung A gemäß IEC 112,
Flammtest gemäß UL 94/IEC 707 FV
Formbeständigkeitstemperatur (HDT/Af bei 1,8N/mm$^2$) gemäß ISO/DIS 75,
Biegeversuch bei v = 5 mm/min gemäß ISO 178
Biege-Modul bei v = 2 mm/min gemäß ISO 178
Zugversuch bei v = 5 mm/min gemäß ISO 527
Zug-Modul bei v = 1mm/min gemäß ISO 527
Izod-Schlagzähigkeit bei 23°C, gemäß ISO 180/1 A
Volumen-Fließindex (MVR) gemäß ISO 1133

Tabelle 1

| Eigenschaften | Dimension | Beispiel 1A | Beispiel 1B |
|---|---|---|---|
| | | erfindungsgemäß | Vergleich |
| CTI A | Stufe | 225 | 175 |
| Flammtest nach UL | | | |
| 1,6 mm | Klasse | V0 | V0 |
| 0,8 mm | Klasse | V2 | V2 |
| Biegefestigkeit | MPa | 242 | 234 |
| Biege-Modul | MPa | 10 500 | 10 300 |
| MVR 260°C/2,16 kg | cm$^3$/10 min | 11,3 | 8,5 |
| Schlagzähigkeit | kJ/m$^2$ | 51 | 48 |

Das erfindungsgemäße Beispiel 1A zeigt eine bessere Kriechstromfestigkeit, Biegefestigkeit, Biege-Modul und Fließverhalten als das Vergleichsbeispiel 1B.

Tabelle 2

| Flammgeschützte thermoplastische Formmasse mit hohem Fließverhalten und guter Wärmeformbeständigkeit | | | | |
|---|---|---|---|---|
| Eigenschaften | Dimension | Beispiel 2A | Beispiel 2B | Beispiel 2C |
| | | erfindungsgemäß | erfindungsgemäß | Vergleich |
| HDT A (ISO 75) | °C | 234 | 233 | 231 |
| Flammtest nach UL | | | | |
| 1,6 mm | Klasse | V0 | V0 | nicht bestanden |
| 0,8 mm | Klasse | V2 | V0 | nicht bestanden |
| MVR 270°C/5 kg | $cm^3$/10 min | 62,0 | 59 | 54 |

Das erfindungsgemäße Beispiel 2A zeigt eine deutlich bessere Formbeständigkeitstemperatur, Fließfähigkeit und V2 bei 0,8 mm bzw. V0 bei 1,6 mm Wandstärke bezüglich Flammschutz als das Vergleichsbeispiel 2C. Das erfindungsgemäße Beispiel 2B zeigt eine bessere Wärmeformbeständigkeit, Fließfähigkeit und V0 bei 0,8 mm und 1,6 mm Wandstärke bezüglich Flammschutz als das Vergleichsbeispiel 2C.

Tabelle 3

| Flammgeschützte thermoplastische Formmasse mit hohen Dehnungs-, Spannungs- und Festigkeitswerten bei gleichzeitig gutem E-Modul. | | | |
|---|---|---|---|
| Eigenschaften | Dimension | Beispiel 3A | Beispiel 3B |
| | | erfindungsgemäß | Vergleich |
| Streckspannung | MPa | 46 | 43 |
| Bruchdehnung | % | 45 | 20 |
| Zug-Modul | MPa | 2715 | 2365 |
| Biegespannung | MPa | 77 | 67 |
| Biege-Modul | MPa | 2550 | 2230 |
| Flammtest nach UL 1,6 mm | Klasse | V0 | V0 |

Das erfindungsgemäße Beispiel 3A zeigt eine bessere Bruchdehnung, erhöhte Biegespannung und E-Moduli als Vergleichsbeispiel 3B.

**Patentansprüche**

**1.** Thermoplastische Formmassen, enthaltend

A) 25 bis 97 Gew.-Teile Polyalkylenterephthahalat,
B) 3 bis 20 Gew.-Teile Di-Natrium-tetrabromphthalat,
C) 0 bis 10 gew.-Teile Antimontrioxid oder Antimonpentoxid und
D) 0 bis 45 Gew.-Teile Verstärkungsmittel,

wobei die Summe aus A+B+C+D 100 ergibt und wobei bis zu 25 Gew.-Teile Polyalkylenterephthalat durch aromatisches Polycarbonat und/oder Pfropfpolymerisat ersetzt sein können, und wobei 1 bis 10 Gew.-Teile (bezogen auf 100 Gew.-Teile Gesamtgewicht) Polyolefine zugesetzt werden können.

**2.** Thermoplastische Formmassen gemäß Anspruch 1, wobei die Pfropfpolymerisate aus mindestens 2 Monomeren

ausgewählt aus Chloropren, Isopren, Isobuten, Butadien, Styrol, Acrylnitril, Ethylen, Propylen, Vinylacetat und (Meth)Acrylsäureester mit 1 bis 18 C-Atomen in der Alkoholkomponente zusammengesetzt sind.

3. Thermoplastische Formmassen gemäß Anspruch 1, wobei die Pfropfpolymerisate mit Styrol und/oder Acrylnitril und/oder (Meth)Acrylsäurealkylester gepfropfte Polybutadiene, Butadien/Styrol-Copolymerisate oder Poly(meth)acrylsäureester, Copolymerisate aus Styrol oder Alkylstyrol und konjugierten Dienen sind.

4. Thermoplastische Formmassen gemäß Anspruch 1, die übliche Zusatzstoffe enthalten.

5. Thermoplastische Formmassen gemäß Anspruch 4, wobei die Zusatzstoffe ausgewählt sind aus der Gruppe der Gleit- und Entformungsmittel, Verarbeitungshilfsmittel, Farbstoffe und Pigmente.

6. Verwendung der thermoplastischen Formmassen gemäß Anspruch 1 zur Herstellung von Formkörpern.

7. Formkörper, hergestellt aus thermoplastischen Formmassen gemäß Anspruch 1.